# EUROPEAN PATENT APPLICATION

(11) **EP 4 391 201 A1**
(43) Date of publication of application: **26.06.2024**
(21) Application number: 22942300.9
(22) Date of filing: 08.07.2022
(51) Int. Cl.: H01M 50/502, H01R 13/52

(54) **OUTPUT TERMINAL PROTECTION STRUCTURE, BATTERY, AND ELECTRIC DEVICE**

(30) Priority: 16.05.2022 CN 202221168109 U
(71) Applicant: Contemporary Amperex Technology Co., Limited, Ningde, Fujian 352100 (CN)
(72) Inventor: LI, Yanheng, Ningde, Fujian 352100 (CN); CHEN, Guize, Ningde, Fujian 352100 (CN); YU, Kaiqin, Ningde, Fujian 352100 (CN); MA, Yan, Ningde, Fujian 352100 (CN); LIN, Baiqing, Ningde, Fujian 352100 (CN)
(74) Representative: Holt, Lucy Rose
(86) International application number: PCT/CN2022/104613
(87) International publication number: WO 2023/221269

(57) **Abstract**

The present application relates to an output terminal protection structure (300), a battery, and an electric device. The output terminal protection structure (300) comprises: an output terminal base (31) having a mounting face; a protective cover (32), which is mounted on the output terminal base (31), the protective cover (32) being rotatable relative to the output terminal base (31), so as to switch between an open state in which the mounting face is exposed and a closed state in which the mounting face is shielded; and a reset member (33), which is mounted on the output terminal base (31), the reset member (33) being configured to apply an acting force to the protective cover (32) to switch same from the open state to the closed state. Due to the provision of the reset member (33), an operator does not need to manually close the protective cover (32) after the operation is completed, and the protective cover (32) can automatically restore to the closed state under the action of resetting of the reset member (33), thereby avoiding potential safety hazards caused by the exposure of components such as an output terminal connecting sheet.

## Description

The present application refers to Chinese patent application no. 202221168109.2, filed on May 16, 2022 and entitled "OUTPUT ELECTRODE PROTECTIVE STRUCTURE, BATTERY AND POWER CONSUMING DEVICE", which is incorporated herein by reference in its entirety.

### Technical Field

The present application relates to the technical field of batteries, and in particular to an output electrode protective structure, a battery and a power consuming device.

### Background Art

Energy conservation and emission reduction are the key to the sustainable development of the automobile industry. Electric vehicles have become crucial for the sustainable development of the automobile industry due to advantages in energy conservation and environmental protection. For the electric vehicles, the battery technology is an important factor to their development.

In addition to battery cells, a battery further includes mechanical structures such as an end plate and a base plate. The end plate is usually provided with a connecting piece protective structure, which is configured to connect an output electrode connecting piece and provide insulation protection for the output electrode connecting piece. However, in some cases, the connecting piece protective structure is inconvenient to use due to its structural defects, and is prone to protection failure resulting in exposure of high-voltage parts, thus causing a risk of electric shock.

### Summary of the Invention

Based on this, it is necessary to provide an output electrode protective structure, a battery and a power consuming device, for the problem of inconvenience in use and proneness to protection failure of the connecting piece protective structure.

According to a first aspect of embodiments of the present application, provided is an output electrode protective structure, including:
an output electrode base having a mounting face;
a protective cover mounted to the output electrode base, the protective cover being rotatable relative to the output electrode base to switch between an open state in which the mounting face is exposed and a closed state in which the mounting face is concealed; and
a restoring member mounted to the output electrode base, the restoring member being configured to apply an acting force to the protective cover to switch it from the open state to the closed state.

In a technical solution of the embodiments of the present application, with the arrangement of the restoring member, when the output electrode protective structure is in a natural state, the acting force is continuously applied to the protective cover under the action of the restoring member to keep the protective cover in the closed state, and in this case, the protective cover conceals the mounting face. When an output electrode connecting piece needs to be disassembled, an operator overcomes the acting force applied to the protective cover from the restoring member to switch the protective cover to the open state for an operation. After completing the operation, the operator stops applying an acting force to the protective cover that is opposite to that of the restoring member, and the protective cover switches back to the closed state under a restoring effect of the restoring member so as to protect the output electrode connecting piece. Therefore, the operator does not need to close the protective cover manually after completing the operation, and the protective cover can automatically return to the closed state under the restoring effect of the restoring member, thereby avoiding safety hazards caused by exposing the output electrode connecting piece and other components. In addition, since the protective cover is kept in the closed state by the acting force of the restoring member, there is no need to provide additional components such as snap-fit connectors to keep the protective cover closed, and thus the protective cover can be opened quickly to improve the convenience in operation.

In some embodiments, the restoring member is restorably deformable under the action of an external force so as to apply the acting force to the protective cover. In this way, by deformation of the restoring member under the action of the external force only, the acting force can be applied to the protective cover to switch it from the open state to the closed state. Therefore, the overall output electrode protective structure is simple and reliable, and has a low manufacturing cost.

In some embodiments, the restoring member includes at least one torsion spring unit, the torsion spring unit including:
a torsion spring body, restricted to the output electrode base;
a first torsion arm, connected to one end of the torsion spring body, the first torsion arm abutting against the output electrode base; and
a second torsion arm, connected to the other end of the torsion spring body, the second torsion arm abutting against the protective cover.

In this way, automatic restoration of the protective cover can be achieved with the deformation of the restoring member. The overall structure is simple and reliable, and has a low production cost.

In some embodiments, the output electrode base is provided with a mounting recess at one end, the mounting recess has a recess bottom wall and a recess side wall that extends in the same direction from the recess bottom wall, the recess side wall is provided with a limiting post protruding into the mounting recess, and the torsion spring body is provided around the limiting post. With the arrangement of the mounting recess, the restoring member can be hidden between the output electrode base and the protective cover. The arrangement of the limiting post can function to restrict and support the restoring member to prevent the restoring member from falling out of the mounting recess.

In some embodiments, the recess bottom wall is provided with a limiting slot, and the first torsion arm is restricted in the limiting slot. In this way, the first torsion arm is restricted to the recess bottom wall of the mounting recess by means of the limiting slot, avoiding a displacement of the restoring member which affects working stability of the protective cover.

In some embodiments, the restoring member includes two torsion spring units, the two torsion spring units are arranged side by side in a direction of an axis of rotation of the protective cover, and the second torsion arms of the two torsion spring units are connected to each other. The two torsion spring units are spaced apart in a width direction of the output electrode base, and the joint of the two torsion spring units extends along the width direction of the output electrode base, so that two sides of the protective cover can be rotated simultaneously in the width direction to maintain a balanced state.

In some embodiments, the output electrode base is provided with two mounting posts spaced apart in the direction of an axis of rotation of the protective cover, the protective cover is provided with a mounting hole on each of two opposite sides in the direction of the axis of rotation thereof, and each of the mounting posts is rotatably inserted in one of the mounting holes correspondingly. With the arrangement of the mounting post and the mounting hole, the protective cover is rotatably connected to the output electrode base, the operator may apply an acting force to the end of the protective cover away from the mounting hole so as to drive the protective cover to rotate relative to the output electrode base.

In some embodiments, the protective cover is provided with a guide recess, one end of the guide recess communicates with the mounting hole, the other end of the guide recess extends in a radial direction of the mounting hole, and the mounting post is allowed to slide into the mounting hole along the guide recess. With the arrangement of the guide recess, the protective cover can fit with the output electrode base easily, improving assembly efficiency of the output electrode protective structure.

In some embodiments, the protective cover includes:
a protective cover top wall;
a protective cover side wall extending from the protective cover top wall toward the output electrode base; and
a detachable side wall connected to the side of the protective cover side wall away from the protective cover top wall, where a break slot is disposed at the joint between the detachable side wall and the protective cover side wall.

With the arrangement of the break slot, a connection length between the detachable side wall and the protective cover side wall is significantly reduced, bringing convenience for the operator to break the detachable side wall at the corresponding position according to an outgoing direction of the output electrode connecting piece, while the remaining detachable side wall is still connected to the protective cover side wall to play a role of insulation protection.

According to a second aspect of embodiments of the present application, provided is a battery, including an output electrode protective structure in the foregoing embodiments.

According to a third aspect of embodiments of the present application, provided is a power consuming device, including a battery in the foregoing embodiments.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic diagram of a vehicle according to some embodiments of the present application;
FIG. 2 is a schematic diagram of a battery according to some embodiments of the present application;
FIG. 3 is a schematic diagram of an output electrode protective structure in a closed state according to some embodiments of the present application;
FIG. 4 is a schematic diagram of the output electrode protective structure in an open state according to some embodiments of the present application;
FIG. 5 is a schematic diagram of a restoring member of an output electrode protective structure according to an embodiment of the present application;
FIG. 6 is a schematic diagram of an output electrode base of an output electrode protective structure according to some embodiments of the present application;
FIG. 7 is a schematic diagram of a protective cover of an output electrode protective structure according to some embodiments of the present application; and

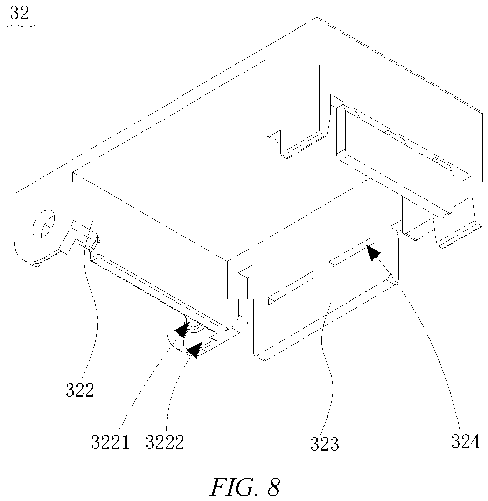

FIG. 8 is a schematic diagram of the protective cover of the output electrode protective structure according to an embodiment of the application in another view.

List of reference numerals: 10000. Vehicle; 1000. Battery; 2000. Controller; 3000. Motor; 100. Frame structure; 200. Battery cell; 300. Output electrode protective structure; 31. Output electrode base; 311. Base top wall; 3111. Threaded hole; 312. Base side wall; 313. Mounting portion; 3131. Mounting recess; 3131a. Recess bottom wall; 3131b. Recess side wall; 3131c. Limiting slot; 3131d. Limiting post; 3132. Mounting post; 32. Protective cover; 321. Protective cover top wall; 322. Protective cover side wall; 3221. Mounting hole; 3222. Guide recess; 323. Detachable side wall; 324. Break slot; 33. Restoring member; 331. Torsion spring unit; 3311. Torsion spring body; 3312. First torsion arm; and 3313. Second torsion arm.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

A traction battery may include a plurality of battery cells in order to meet different power demands, with the plurality of battery cells being in series connection, parallel connection or series-parallel connection. The traction battery is further arranged in a power consuming device to supply electrical energy to the power consuming device. Each battery cell may be a secondary battery or a primary battery, or may be a lithium-sulfur battery, a sodium-ion battery, or a magnesium-ion battery, but is not limited thereto. The battery cell may be cylindrical, flat, rectangular, or in other shapes.

In order to realize the output of electrical energy of the battery and the series or parallel or series-parallel connection of a plurality of batteries, an output end of the battery is provided with an output electrode connecting piece for outputting electrical energy, and the output electrode connecting pieces of adjacent batteries can be electrically connected through a module connecting piece.

In order to connect the output electrode connecting piece and perform insulation protection thereon, some batteries are provided with an output electrode protective structure at the output end. The output electrode protective structure includes an output electrode base and a protective cover, and both the output electrode base and the output electrode connecting piece are provided with connecting holes. When performing connection, a bolt passes through the connecting holes of the two so that the output electrode connecting piece is fixedly connected to the base body.

The inventor noted that in order to connect the protective cover and the output electrode base reliably and facilitate the opening and closing of the protective cover, in some cases, one end of some of the protective cover is rotatably mounted to the output electrode base, and the other end of the protective cover is snap-fitted with the output electrode base by means of buckles, etc., and the opening and closing of the protective cover can be achieved by rotating the protective cover. However, in installation and maintenance, the operator may often forget to close the protective cover after completing an operation, and the open state of the protective cover may lead to high-voltage components such as the output electrode connecting piece exposing to an external environment, thus causing a risk of electric shock.

Based on the above considerations, in order to prevent the operator from negligently forgetting to close the protective cover and exposing the high-voltage parts, the inventor designed an output electrode protective structure after an in-depth study. The output electrode protective structure includes an output electrode base, a protective cover and a restoring member. The protective cover is rotatably mounted to the output electrode base, and the restoring member is configured to apply an acting force to the protective cover to switch it from an open state to a closed state. When an installation or maintenance operation is required, the operator can open the protective cover by overcoming the acting force of the restoring member. After the installation or maintenance operation is completed, the protective cover automatically switches from the open state to the closed state under driving of the restoring member, without the need for the operator to manually close the protective cover, thereby avoiding the risk of electric shock caused by the output electrode connecting piece being exposed to the external environment due to the operator's negligence causing the protective cover to be in the open state.

The output electrode protective structure disclosed the embodiments of the present application may be used in, but not limited to, a power consuming device such as a vehicle, ship or aircraft, and a battery disclosed in the present application may be used to constitute a power supply system of such power consuming device, thereby avoiding the risk of electric shock caused by the operator forgetting to close the output electrode protective structure.

The embodiments of the present application provide a power consuming device using a battery as a power supply. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

For ease of description, an example in which a power consuming device according to an embodiment of the present application refers to a vehicle is used for description in the following embodiments.

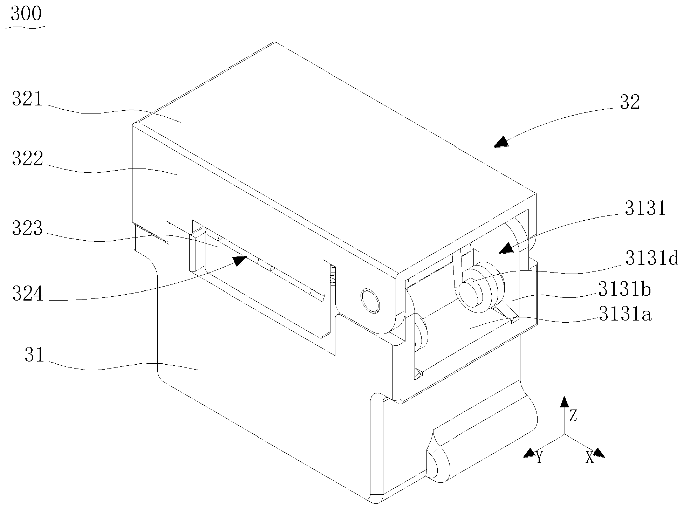

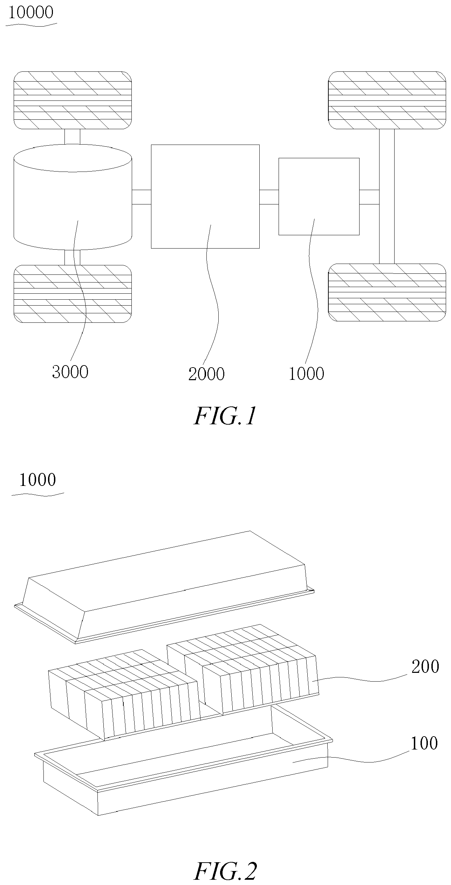

Referring to FIG. 1, the vehicle 10000 may be a fuel vehicle, a gas vehicle, or a new energy vehicle. The new energy vehicle may be a battery electric vehicle, a hybrid electric vehicle, an extended-range vehicle, etc. A battery 1000 is arranged inside the vehicle 10000, and the battery 1000 may be arranged at the bottom, the front or the back of the vehicle 10000. The battery 1000 may be configured to supply power to the vehicle 10000. For example, the battery 1000 may serve as a power supply for operating the vehicle 10000. The vehicle 10000 may further include a controller 2000 and a motor 3000, and the controller 2000 is used to control the battery 1000 to supply power to the motor 3000, for example, to satisfy the working power requirements during the starting, navigation and driving of the vehicle 10000. In some other embodiments of the present application, the battery 1000 can not only serve as a power supply for operating the vehicle 10000, but also serve as a power supply for driving the vehicle 10000, instead of or partially instead of fuel or natural gas, to provide driving power for the vehicle 10000.

As shown in FIG. 2, the battery 1000 includes a frame structure 100 and a plurality of battery cells 200 received within the frame structure 100. The plurality of battery cells 200 are stacked on top of each other along a length direction to form a battery cell arrangement structure. The frame structure 100 may include end plates, side plates, a top cover, and a base plate. The top cover and the base plate are disposed facing each other. There are two end plates and two side plates. The two end plates are respectively arranged on opposite sides of a stacking direction of the battery cells 200. The two side plates are respectively connected to two opposite sides of the two end plates.

Further, the end plate is provided with an output electrode protective structure 300. An output electrode of the battery cell 200 is connected to the output electrode protective structure 300 through an output electrode connecting piece, thereby realizing the output and input of the electrical energy of the battery 1000, and realizing insulation protection for the output electrode connecting piece through the output electrode protective structure 300.

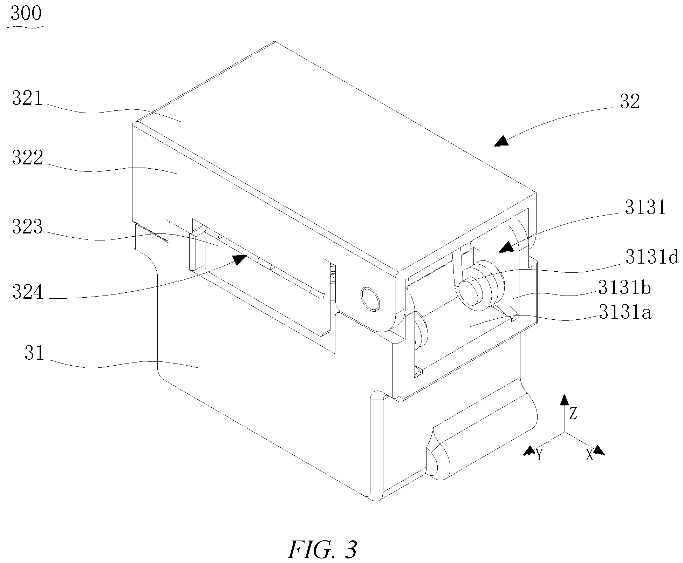

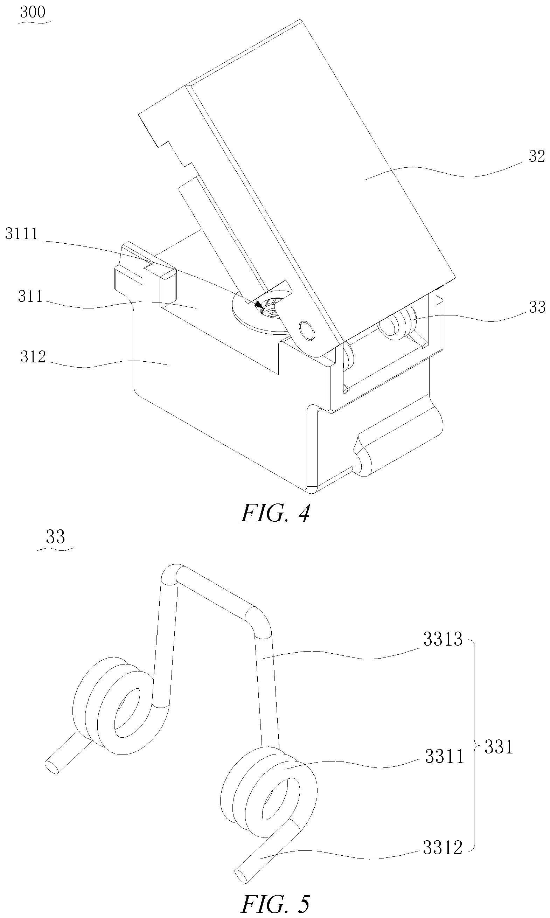

As shown in FIG. 3 and FIG. 4, according to some embodiments of the present application, the present application provides an output electrode protective structure 300, including an output electrode base 31, a protective cover 32, and a restoring member 33. The output electrode base 31 has a mounting face. The protective cover 32 is mounted to the output electrode base 31. The protective cover 32 is rotatable relative to the output electrode base 31 to switch between an open state in which the mounting face is exposed and a closed state in which the mounting face is concealed. The restoring member 33 is mounted to the output electrode base 31, the restoring member 33 being configured to apply an acting force to the protective cover 32 to switch it from the open state to the closed state.

The output electrode base 31 is mounted to one end plate of the battery 1000. The output electrode base 31 is a hollow cube shell-like structure, including a base top wall 311 and a base side wall 312 that extends in the same direction from an edge of the base top wall 311. The base top wall 311 forms the mounting face of the output electrode base 31. A threaded hole 3111 is disposed at the center of the mounting face. A connecting hole is disposed at one end of the output electrode connecting piece. A bolt passes through the connecting hole of the output electrode connecting piece to be in threaded connection with the threaded hole 3111, so that the output electrode connecting piece is fixedly connected to the output electrode base 31.

The output electrode base 31 is required to be made of an insulating material, which in some embodiments may be an injection molded plastic structure or a plastic structure, and is therefore capable of providing insulation protection for the output electrode connecting piece. As a preferred embodiment, the output electrode base 31 is made of PA6 nylon plastic (also known as polyamide 6), which has good insulating property, toughness and durability.

As shown in FIG. 3, the direction X in the figure is a length direction of the output electrode base 31, the direction Y is a width direction of the output electrode base 31, and the direction Z is a thickness direction of the output electrode base 31.

The protective cover 32 is of a shell-like structure. The protective cover 32 is made of the same or different insulating material as the output electrode base 31, which may be, for example, an injection molded plastic structure or a plastic structure, and is therefore capable of providing insulation protection for the output electrode connecting piece. As a preferred embodiment, the protective cover 32 is made of the same PA6 nylon plastic (also known as polyamide 6) as the output electrode base 31, which has good insulating property, toughness and durability.

The open state in which the mounting face is exposed means that one end of the protective cover 32 is rotated in a direction away from the output electrode base 31 to form an angle of a certain size with the output electrode base 31, in this case, the mounting face is at least partially exposed to the external environment. Then the operator can operate the components such as the output electrode connecting piece on the mounting face. The closed state in which the mounting face is concealed means that one end of the protective cover 32 is rotated in a direction close to the output electrode base 31 to form an angle of a minimum value with the output electrode base 31, in this case, the mounting face is completely covered by the protective cover 32. With the blocking of the protective cover 32, the operator cannot operate the components between the mounting face and the protective cover 32.

The restoring member 33 is a component of any shape that can apply an acting force to the protective cover 32 to switch it from the open state to the closed state without the need for additional artificially applied force.

With the arrangement of the restoring member 33, as shown in FIG. 3, when the output electrode protective structure 300 is in a natural state, the acting force is continuously applied to the protective cover 32 under the action of the restoring member 33 to keep the protective cover 32 in the closed state, and in this case, the protective cover 32 conceals the mounting face. As shown in FIG. 4, when the output electrode connecting piece needs to be disassembled, the operator overcomes the acting force applied to the protective cover 32 from the restoring member 33 to switch the protective cover 32 to the open state for an operation. After completing the operation, the operator stops applying an acting force to the protective cover 32 that is opposite to that of the restoring member 33, and the protective cover 32 switches back to the closed state under a restoring effect of the restoring member 33. Therefore, the operator does not need to close the protective cover 32 manually after completing the operation, and the protective cover 32 can automatically return to the closed state under the restoring effect of the restoring member 33, thereby avoiding safety hazards caused by exposing the output electrode connecting piece and other high-voltage components. In addition, since the protective cover 32 is kept in the closed state by the acting force of the restoring member 33, there is no need to provide additional components such as snap-fit connectors to keep the protective cover 32 closed, and thus the protective cover 32 can be opened quickly to improve the convenience in operation.

According to some embodiments of the present application, the restoring member 33 is restorably deformable under the action of an external force so as to apply the acting force to the protective cover 32.

The restoring member 33 can be deformed under the action of an external force, and when the external force disappears, the restoring member 33 is automatically restored to its initial shape. When a force-applying component applies a certain acting force to the restoring member 33, the shape of the restoring member 33 may be changed under the acting force. Since forces always act in pairs, the restoring member 33 applies a reacting force to the force-applying component while trying to restore to the original shape. When the acting force applied to the restoring member 33 is reduced or eliminated, the change in shape of the restoring member 33 is reduced or the restoring member is restored to its original shape, and at the same time, the reacting force of the restoring member on the force-applying component is reduced or disappears.

In this way, by deformation of the restoring member 33 under the action of the external force only, the acting force can be applied to the protective cover 32 to switch it from the open state to the closed state. Therefore, the overall output electrode protective structure 300 is simple and reliable, and has a low manufacturing cost.

With reference to FIG. 3, FIG. 4 and FIG. 5, according to some embodiments of the present application, the restoring member 33 includes at least one torsion spring unit 331, the torsion spring unit 331 including a torsion spring body 3311, a first torsion arm 3312 and a second torsion arm 3313. The torsion spring body 3311 is restricted to the output electrode base 31. The first torsion arm 3312 is connected to one end of the torsion spring body 3311, and the first torsion arm 3312 abuts against the output electrode base 31. The second torsion arm 3313 is connected to the other end of the torsion spring body 3311, and the second torsion arm 3313 abuts against the protective cover 32.

The torsion spring unit 331 may be formed by bending a metal wire having a certain degree of toughness. The middle of the wire spirally bends and extends in a direction to form the torsion spring body 3311. One end of the metal wire extends linearly in a tangent direction of the torsion spring body 3311 to form the first torsion arm 3312, and the other end of the metal wire extends linearly in another tangent direction of the torsion spring to form the second torsion arm 3313. When the first torsion arm 3312 and the second torsion arm 3313 rotate about the central axis of the torsion spring body 3311, the torsion spring body 3311 deforms to produce a torque that attempts to pull the first torsion arm 3312 and the second torsion arm 3313 back to their initial positions.

Abutting refers to an abutting contact, where two ends of the restoring member 33 abut against the base and protective cover 32, respectively, to the base, thereby applying an acting force to the base and the protective cover 32.

When the protective cover 32 is in the closed state, the first torsion arm 3312 and the second torsion arm 3313 rotate to a certain degree relative to their natural states; the torsion spring body 3311 deforms to produce a torque that attempts to pull the first torsion arm 3312 and the second torsion arm 3313 back to their natural positions, and the second torsion arm 3313 abuts against the protective cover 32 by the torque so as to keep the protective cover 32 in the closed state. When the output electrode connecting piece needs to be disassembled, the operator overcomes the acting force applied to the protective cover 32 from the second torsion arm 3313 to switch the protective cover 32 to the open state. In this case, the torsion spring body 3311 deforms to a greater extent so that the second torsion arm 3313 applies a greater acting force to the protective cover 32. After completing the operation, the operator releases the protective cover 32, and the second torsion arm 3313 rotates to the initial state by the torque of the torsion spring body 3311, so as to drive the protective cover 32 to switch to the closed state again.

In this way, automatic restoration of the protective cover 32 can be achieved using the deformation of the restoring member 33. The overall structure is simple and reliable, and has a low production cost.

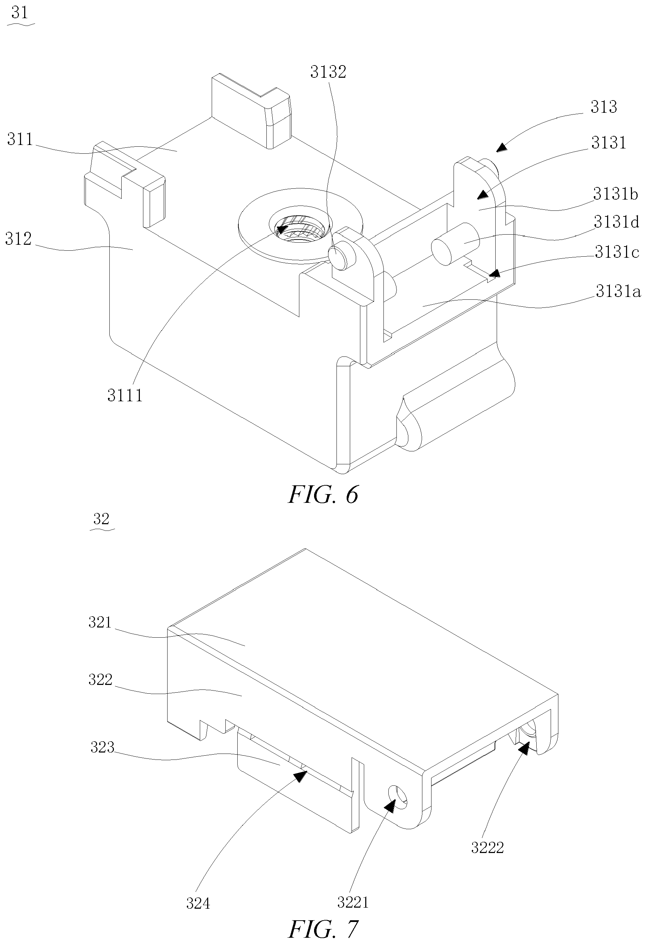

With reference to FIG. 6, according to some embodiments of the present application, the output electrode base 31 is provided with a mounting recess 3131 at one end, the mounting recess 3131 has a recess bottom wall 3131a and a recess side wall 3131b that extends in the same direction from an edge of the recess bottom wall 3131a, the recess side wall 3131b is provided with a limiting post 3131d protruding into the mounting recess 3131, and the torsion spring body 3311 is provided around the limiting post 3131d.

The output electrode base 31 is provided with a mounting portion 313 at one end in a direction of the upper portion. The mounting portion 313 protrudes from the base top wall 311 in a height direction of the output electrode base 31. The mounting portion 313 and the base top wall 311 together enclose to form the mounting recess 3131. The recess bottom wall 3131a of the mounting recess 3131 is formed by one end of the base top wall 311 and refers to the surface of the mounting recess 3131 perpendicular to the height direction of the output electrode base 31. The recess side wall 3131b refers to the surface of the mounting recess 3131 parallel to the height direction of the output electrode base 31. The recess side wall 3131b is provided with a limiting post 3131d on each of two sides in the width direction of the output electrode base 31. The limiting post 3131d has a cylindrical structure with a central axis parallel to the width direction of the output electrode base 31. The limiting post 3131d has an outer diameter smaller than an inner diameter of the torsion spring body 3311 of the restoring member 33, so that the torsion spring body 3311 can be provided around the limiting post 3131d to be restricted in the mounting recess 3131.

With the arrangement of the mounting recess 3131, the restoring member 33 can be hidden between the output electrode base 31 and the protective cover 32. The arrangement of the limiting post 3131d can function to restrict and support the restoring member 33 to prevent the restoring member 33 from falling out of the mounting recess 3131.

According to some embodiments of the present application, the recess bottom wall 3131a is provided with a limiting slot 3131c, and the first torsion arm 3312 is restricted in the limiting slot 3131c.

A length direction of the limiting slot 3131c extends along the length direction of the output electrode base 31. The end of the first torsion arm 3312 away from the torsion spring body 3311 extends into the limiting slot 3131c. The first torsion arm 3312 abuts against the bottom surface of the limiting slot 3131c perpendicular to the height direction of the output electrode base 31. Sides of the limiting slot 3131c may prevent the first torsion arm 3312 from moving in a direction perpendicular to the height direction of the output electrode base 31.

In this way, the first torsion arm 3312 is restricted to the recess bottom wall 3131a of the mounting recess 3131 by means of the limiting slot 3131c, avoiding a displacement of the restoring member 33 which affects working stability of the protective cover 32.

Referring further to FIG. 5, according to some embodiments of the present application, the restoring member 33 includes two torsion spring units 331, the two torsion spring units 331 are arranged side by side in a direction of an axis of rotation of the protective cover 32, and the second torsion arms 3313 of the two torsion spring units 331 are connected to each other.

The interconnected ends of the second torsion arms 3313 of the two torsion spring units 331 of the same restoring member 33 extend in the width direction of the output electrode base 31 to be connected to each other. In some embodiments, the two torsion spring units 331 of the same restoring member 33 are formed by bending the same metal wire. It is to be understood that the shape of the restoring member 33 is not limited to this and may be set to match the shapes of the output electrode base 31 and the protective cover 32 as needed. Accordingly, in order to restrict each of the two torsion spring units 331, two limiting slots 3131c are disposed in the recess bottom wall 3131a. The two limiting slots 3131c are spaced apart at two ends of the recess bottom wall 3131a in the width direction of the output electrode base 31.

The two torsion spring units 331 are spaced apart in the width direction of the output electrode base 31, and the joint of the two torsion spring units 331 extends in the width direction of the output electrode base 31, so that two sides of the protective cover 32 can be rotated simultaneously in the width direction to maintain a balanced state.

According to some embodiments of the present application, the output electrode base 31 is provided with two mounting posts 3132 spaced apart in the direction of an axis of rotation of the protective cover 32, the protective cover 32 is provided with a mounting hole 3221 on each of two opposite sides in the direction of the axis of rotation thereof, and each of the mounting posts 3132 is rotatably inserted in one of the mounting holes 3221 correspondingly.

The mounting post 3132 has a cylindrical structure. The direction of axis of rotation of the protective cover 32 is the width direction of the output electrode base 31. The mounting post 3132 has a central axis parallel to the width direction of the output electrode base 31. The mounting hole 3221 has a bore diameter matching that of the mounting post 3132, so that the mounting post 3132 can be inserted in the mounting hole 3221 and rotated in the mounting hole 3221.

With the arrangement of the mounting post 3132 and the mounting hole 3221, the protective cover 32 is rotatably connected to the output electrode base 31, the operator may apply an acting force to the end of the protective cover 32 away from the mounting hole 3221 so as to drive the protective cover 32 to rotate relative to the output electrode base 31.

According to some embodiments of the present application, the protective cover 32 is provided with a guide recess 3222, one end of the guide recess 3222 communicates with the mounting hole 3221, the other end of the guide recess 3222 extends in a radial direction of the mounting hole 3221, and the mounting post 3132 is allowed to slide into the mounting hole 3221 along the guide recess 3222.

The inner surface of the protective cover 32 communicating with the mounting hole 3221 is recessed inwardly to form the guide recess 3222. One end of the guide recess 3222 communicates with the mounting hole 3221, and the other end of the guide recess 3222 extends to an edge of the protective cover 32 in the height direction of the output electrode base 31. When mounting the protective cover 32, the guide recess 3222 of the protective cover 32 is first aligned with the mounting post 3132, then a pressure is applied to the protective cover 32 in the height direction of the output electrode base 31 to move the mounting post 3132 along the guide recess 3222, and finally the mounting post 3132 slides into the mounting hole 3221. Since the protective cover 32 is made of a material with a certain degree of toughness such as PA6 nylon plastic, the protective cover can elastically deform to a certain extent, which allows the mounting post 3132 to slide into the mounting hole 3221.

With the arrangement of the guide recess 3222, the protective cover 32 can fit with the output electrode base 31 easily, improving assembly efficiency of the output electrode protective structure 300.

According to some embodiments of the present application, the protective cover 32 includes a protective cover top wall 321, a protective cover side wall 322 and a detachable side wall 323. The protective cover side wall 322 extends from the protective cover top wall 321 toward the output electrode base 31. The detachable side wall 323 is connected to the side of the protective cover side wall 322 away from the protective cover top wall 321. A break slot 324 is disposed at the joint between the detachable side wall 323 and the protective cover side wall 322.

The protective cover top wall 321 refers to an outer wall in the protective cover 32 that is perpendicular to the height direction of the output electrode base 31. The protective cover side wall 322 refers to an outer wall in the protective cover 32 that extends in the height direction of the output electrode base 31. The detachable side wall 323 may be connected to the protective cover side wall 322 at different positions. Specifically in one embodiment, the protective cover 32 includes two detachable side walls 323, one of the detachable side walls 323 is connected to the end of the protective cover side wall 322 away from the restoring member 33 in the length direction of the output electrode base 31, and the other detachable side wall 323 is connected to the side of the protective cover side wall 322 in the width direction of the output electrode base 31.

The break slot 324 runs through the joint between the detachable side wall 323 and a part of the protective cover side wall 322 in a thickness direction, that is, a part of the break slot 324 is located at the edge of the detachable side wall 323 and the other part of the break slot is located at an edge of the protective cover side wall 322. There is no limit to the number of break slots 324. In some embodiments, only one break slot 324 may be provided at the joint between the detachable side wall 323 and the protective cover side wall 322, the break slot 324 extending in the length direction of the output electrode base 31. In some other embodiments, a plurality of break slot 324 may be provided at the joint between the detachable side wall 323 and the protective cover side wall 322, the plurality of break slot 324 being spaced apart in the length direction of the output electrode base 31.

With the arrangement of the break slot 324, a connection length between the detachable side wall 323 and the protective cover side wall 322 is significantly reduced, bringing convenience for the operator to break the detachable side wall 323 at the corresponding position according to an outgoing direction of the output electrode connecting piece, while the remaining detachable side wall 323 is still connected to the protective cover side wall 322 to play a role of insulation protection.

According to some embodiments of the present application, the present application further provides a battery 1000, the battery 1000 including the output electrode protective structure 300 described in any one of the above solutions.

According to some embodiments of the present application, the present application further provides a power consuming device, including the battery 1000 described in any one of the above solutions. The battery 1000 is configured to provide electrical energy for the power consuming device.

The power consuming device may be any one of the foregoing devices or systems using the battery 1000.

According to some embodiments of the present application, the present application provides an output electrode protective structure 300, including an output electrode base 31, a protective cover 32 and a restoring member 33. A base top wall 311 of the output electrode base 31 forms a mounting face for connecting an output electrode connecting piece. The protective cover 32 is rotatably mounted to the output electrode base 31. The protective cover 32 is rotatable relative to the output electrode base 31 to switch between an open state in which the mounting face is exposed and a closed state in which the mounting face is concealed. The restoring member 33 is mounted to the output electrode base 31. The restoring member 33 includes two interconnected torsion spring units 331. The restoring member 33 is restorably deformable under the action of an external force so as to apply an acting force to the protective cover 32 to switch it from the open state to the closed state. When the operator releases the protective cover 32 in the open state, the protective cover 32 can automatically return to the closed state under driving of the restoring member 33, thereby preventing the components such as the output electrode connecting piece from being exposed to the external environment. In addition, the protective cover 32 has a detachable side wall 323 connected to the protective cover side wall 322, and the operator can break the corresponding detachable side wall 323 according to an outgoing direction of the output electrode connecting piece to meet different requirements.

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

The embodiments described above merely illustrate several implementations of the present application and are described relatively specifically and in detail, but should not be construed as limiting the patent scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims.

## Claims

1. An output electrode protective structure, comprising:
an output electrode base (31) having a mounting face;
a protective cover (32) mounted to the output electrode base (31), the protective cover (32) being rotatable relative to the output electrode base (31) to switch between an open state in which the mounting face is exposed and a closed state in which the mounting face is concealed; and
a restoring member (33) mounted to the output electrode base (31), the restoring member (33) being configured to apply an acting force to the protective cover (32) to switch the protective cover (32) from the open state to the closed state.

2. The output electrode protective structure according to claim 1, wherein the restoring member (33) is restorably deformable under the action of an external force so as to apply the acting force to the protective cover (32).

3. The output electrode protective structure according to either of claim 1 or 2, wherein the restoring member (33) comprises at least one torsion spring unit (331), the torsion spring unit (331) comprising:
a torsion spring body (3311), restricted to the output electrode base (31);
a first torsion arm (3312), connected to one end of the torsion spring body (3311), the first torsion arm (3312) abutting against the output electrode base (31); and
a second torsion arm (3313), connected to the other end of the torsion spring body (3311), the second torsion arm (3313) abutting against the protective cover (32).

4. The output electrode protective structure according to claim 3, wherein the output electrode base (31) is provided with a mounting recess (3131) at one end, the mounting recess (3131) has a recess bottom wall (3131a) and a recess side wall (3131b) that extends in the same direction from the recess bottom wall (3131a), the recess side wall (3131b) is provided with a limiting post (3131d) protruding into the mounting recess (3131), and the torsion spring body (3311) is provided around the limiting post (3131d).

5. The output electrode protective structure according to claim 4, wherein the recess bottom wall (3131a) is provided with a limiting slot (3131c), and the first torsion arm (3312) is restricted in the limiting slot (3131c).

6. The output electrode protective structure according to any one of claims 3 to 5, wherein the restoring member (33) comprises two of the torsion spring units (331), the two torsion spring units (331) are arranged side by side in a direction of an axis of rotation of the protective cover (32), and the second torsion arms (3313) of the two torsion spring units (331) are connected to each other.

7. The output electrode protective structure according to any one of claims 1 to 6, wherein the output electrode base (31) is provided with two mounting posts (3132) spaced apart in the direction of the axis of rotation of the protective cover (32), the protective cover (32) is provided with a mounting hole (3221) on each of two opposite sides in the direction of the axis of rotation thereof, and each of the mounting posts (3132) is rotatably inserted in one of the mounting holes (3221) correspondingly.

8. The output electrode protective structure according to claim 7, wherein the protective cover (32) is provided with a guide recess (3222), one end of the guide recess (3222) communicates with the mounting hole (3221), the other end of the guide recess (3222) extends in a radial direction of the mounting hole (3221), and the mounting post (3132) is allowed to slide into the mounting hole (3221) along the guide recess (3222).

9. The output electrode protective structure according to any one of claims 1 to 8, wherein the protective cover (32) comprises:
a protective cover top wall (321);
a protective cover side wall (322) extending from the protective cover top wall (321) toward the output electrode base (31); and
a detachable side wall (323) connected to one side of the protective cover side wall (322) away from the protective cover top wall (321), wherein a break slot (324) is disposed at the joint between the detachable side wall (323) and the protective cover side wall (322).

10. A battery, comprising an output electrode protective structure according to any one of claims 1 to 9.

11. A power consuming device, comprising a battery according to claim 10.
